# EUROPEAN PATENT APPLICATION

(11) **EP 4 795 937 A2**
(43) Date of publication of application: **26.08.2026**
(21) Application number: 26159213.3
(22) Date of filing: 18.02.2026
(51) Int. Cl.: A22C 25/00, A22B 3/08

(54) **ELECTRIC STUNNER APPARATUS FOR IMMOBILIZING AQUATIC ANIMALS**

(30) Priority: 21.02.2025 NO 20250200
(71) Applicant: Optimar AS, 6050 Valderøy (NO)
(72) Inventor: NORDTØMME, Frank, 6050 Valderøy (NO); HELLEBOSTAD, Anders, 6050 Valderøy (NO); GISKE, Lars André Langøyli, 6050 Valderøy (NO); VIK, Bjørnar André, 6050 Valderøy (NO)
(74) Representative: Acapo Onsagers AS

(57) **Abstract**

An electric stunning apparatus (100) for anesthetizing an aquatic animal (10), hereunder fish and crustaceans, wherein the electric stunning apparatus (100) comprises an electric stunning device (300) configured to achieve controlled exposure time for electric field strength applied to the aquatic animal (10) in the electric stunning phase.

## Description

The disclosed embodiments relate to an electric stunner apparatus for anesthetizing aquatic animals.

The disclosed embodiments especially relate to an electric stunner apparatus for anesthetizing aquatic animals, hereunder fish and crustaceans, by means of controlled exposure time for electric field strength applied to the aquatic animal in an electrical stunning phase.

### Background

Electric stunning of aquatic animals, hereunder fish or crustaceans, for the purpose of anesthetizing the aquatic animal prior to slaughtering and bleeding. It is also known to electrically stunning aquatic animals in other areas, such as research or treatment, where the aquatic animal has to be anesthetizing prior to being handled for treatment or other activities.

Over the last decades there have been presented various solutions for anesthetizing aquatic animals, such as fish or crustaceans, by means of electric stunning.

Examples of the prior art electric stunner apparatuses are found, among others, in, US6132303A, GB2417408 A1, WOO6130017 A1, CA2637860 AA, CN106035589 A, JP2019140957 A2 and NO20210771 A.

Prior research has shown that the strength of the initial electric shock, as well as the duration of it, decides the level of anesthetization (electronarcosis) effect and the length of the effectiveness (lasting unconsciousness) from the applied electric current/voltage. Prior research also showed that it is important to hit the brain with as much of the electric field strength as possible first, especially for aquatic animals in the form of finfish. However, recent research has disproved this interpretation and fact, and documented that this is not crucial or required to achieve a successful anesthetizing. In fact, recent research documents that the important fact is to achieve as good physical contact for the electric field as possible through the head/brain of the fish, irrelevant of direction. Accordingly, as long as the physical contact is sufficient, whether or not the fish is electrocuted from the tail or head is not important to achieve a proper anesthetizing.

In addition to the initial electric shock, it is also important to have control of the exposure time of the electric field strength in the electric stunning phase, i.e. the time where the aquatic animal is exposed to electric field strength. The exposure time determines the duration of the anesthetizing, i.e. how long the aquatic animal is to be anesthetized (unconsciousness).

It is further important to have control of the exposure time of the electric field strength to ensure the desired effect of the electric stunning phase. The exposure time will further be dependent on following actions/processes for the aquatic animal. E.g., a fish to be bleed out (such as salmon and trout) or cut head of (cod) will require less exposure time in the electric stunning phase than an aquatic animal to be killed by means of ice-slurry or CO₂ (such as barramundi or tilapia).

The prior art solutions fail to disclose a solution where one is able to ensure a controlled exposure time of the electric field strength in the electric stunning phase for an aquatic animal.

Mattilsynet issued in 2022 a new guide for fish welfare at slaughterhouses for aquatic animals (*"https:*//*mattilsynet-xp7prod.enonic.cloud*/*_*/*attachment*/*inline*/*5789508b-d392-4387-b729-8a3e31433e26:dcbe6423e4b4e80757f80cb43725c4495585ac0c*/*Veileder%20fiskevelferd%20ved% 20slakteri%20for%20akvakulturdyr%20(oppdatert%20oktober%202022).pdf"*) specifying that also cleaner fish (such as ballan wrasse and lumpfish) shall be anesthetized prior to slaughtering (usually milling/grinding). The cleaner fishes are too small to be anesthetized by use of the prior art solutions, especially due to the fish will be free from electric field strength between two adjacent (rows of) electric stunning members.

ASC (Aquaculture Stewardship Council) is currently working on new stunning standards which will set demands for electrical stunning of animals for food producers aiming for ASC certification: "*https:*//*www.google.com*/*url?sa=t&rct=j&q=&esrc=s&source=web&cd=&ved=2ahUKEwjawM_Axt CLAxV2FhAlHcpqOdsQFnoECCoQAQ&url=https%3A%2F%2Fwww.asc-aqua.org%2Fwp-content%2Fuploads%2F2022%2F08%2FCriterion-2.14a-c-Fish-Health-and-Welfare-Revised-Criterion-Draft.pdf&usg=AOvVaw33-ru_UCCxRHq3ExjATvxh&opi=89978449".* This topic was also discussed in a workshop in February 2025 (*"https:*//*www.centreforaquacultureprogress.org*/*electrical-stunning-workshop-asc-cap-2025"*), hosted by ASC and CAP (Centre for Aquaculture Progress).

Further, the prior art solutions suffer from that they are not configured to handle low-weight aquatic animals. Many of the prior art solutions use downward hanging pivoting electric stunning members that has a weight *per se* that a low-weight aquatic animal transported by a transport unit, such as a conveyer belt, will not be overcome due to too low friction between the transport unit and the aquatic animal. This would result in that the aquatic animal will slide on the transport unit and be prevented from moving along due to the electric conductive members resulting in that one loses control of the exposure time.

Moreover, some prior art solutions make use of flexible hanging electric conductive members. A disadvantage with using such flexible hanging conductive members is that the flexibility thereof causes the electric conductive members to slide off to the side of the aquatic animal and thus not ensuring that an electric field is applied across the brain/head, nor ensuring a stable duration of contact with the animal.

The same applies for smaller aquatic animals, such as low-weight tilapia, barramundi, mackerel, nephrops, shrimps and other crustaceans, etc.

The EFSA (European Food Safety Authority) has presented higher demands for anesthetizing farmed fish and will in the future also have the same demands for fish harvested from the wild.

In addition to the above mentioned, the prior art electric stunner apparatuses are space-demanding.

Due to the above-mentioned disadvantages of the prior art solutions, they are difficult to control and it is difficult to develop control algorithms satisfying the demands set by Mattilsynet and EFSA.

There is accordingly a need for an electric stunning apparatus for anesthetizing aquatic animals enabling full control of the exposure time of the electric field strength applied to the aquatic animal in an electric stunning phase.

### Summary

The disclosed embodiments provide an electric stunning apparatus for anesthetizing aquatic animals partly or entirely solving the drawbacks and lacks of the prior art solutions.

Provided herein is an electric stunning apparatus for anesthetizing aquatic animals enabling full control of the exposure time of electric field strength applied to the aquatic animal in an electric stunning phase.

Also provided herein is an electric stunning apparatus for anesthetizing aquatic animals ensuring that electric field contact with the aquatic animal is maintained during the entire electric stunning phase.

Provided wherein is an electric stunning apparatus for anesthetizing aquatic animals enabling the electric stunning apparatus to be used for differently sized aquatic animals.

Also provided herein is an electric stunning apparatus for anesthetizing aquatic animals enabling controllable exposure time in the electric stunning phase.

Also provided herein is an electric stunning apparatus for anesthetizing aquatic animals that is more compact and less space-demanding that prior art electric stunning apparatuses.

Also provided herein is an electric stunning apparatus for anesthetizing aquatic animals that ensures improved direct contact across the head/brain of the animal, compared to prior art electric stunning apparatuses, ensuring higher accuracy/effect.

Provided herein is an electric stunning apparatus for anesthetizing aquatic animals enabling the use of control algorithms meeting the requirements and demands set by Mattilsynet and EFSA.

Further preferable features will appear by consideration of the following description, claims and attached drawings.

### The invention

An electric stunning apparatus for anesthetizing an aquatic animal according to the present invention is defined by the technical features of claim 1. Preferable features of the electric stunning apparatus are described in the dependent claims.

The present invention is related to an electric stunning apparatus for anesthetizing an aquatic animal, hereunder fish and crustaceans, by electrically stunning the aquatic animal in air, also known as dry electric stunning.

By anesthetizing is herein meant setting the animal in a state with instant and lasting unconsciousness. This is also known as electronarcosis.

According to the present invention, the electric stunning apparatus comprises a transport unit configured to transport aquatic animals through an electric stunning phase wherein the aquatic animal is exposed to an electric field provided by an electric stunning device.

The electric stunning device is positioned in a parallel plane above the transport unit and comprises multiple rigid electric conducting members arranged pivotable in at least one row by a first axial distal end thereof and with a second free axial distal end positioned in close vicinity of the transport unit and configured for engagement with the aquatic animal. The rigid electric conducting members of each row are distributed in transversal direction of the electric stunning device and transport unit.

The electric stunning device according to the present invention is configured to achieve controlled exposure time for electric field strength applied to the aquatic animal in the electric stunning phase.

In accordance with one embodiment of the present invention, this is achieved by that the electric stunning device comprises at least two rows of rigid electric conducting members and wherein the rigid electric conducting members of adjacent rows are configured to be overlapping in transversal direction of the electric stunning device and transport unit.

In accordance with an alternative embodiment of the present invention, this is achieved by that the electric stunning device comprises at least one row of rigid electric conducting members and wherein the rigid electric conducting members are configured with a balanced weight about a pivoting point arranged in the vicinity of the first axial distal end, the balanced weight being configured so that minimum moment is required for pivoting the rigid electric conducting member.

In a further alternative embodiment of the electric stunner apparatus according to the present invention, this is achieved by the combination of overlapping rigid electric conducting members and balanced weight.

In this manner it is ensured that electric contact is achieved between the rigid electric conducting members and the aquatic animal through the entire electric stunning phase and that the aquatic animal passes through the electric field strength of the electric stunning device with a controlled exposure time.

In accordance with one embodiment of the electric stunning apparatus according to the present invention, the rigid electric conducting members are configured to continuously apply electric field strength to the aquatic animal, wherein the applied electric field strength might be the same or different on subsequent rows, or configured to apply the electric field strength in a pulsed manner.

According to a further embodiment, the rigid electric conducting members on the respective row(s) may further be grouped in different configurations with different properties/settings of the electric field strength.

According to one embodiment of the electric stunning apparatus according to the present invention, the rigid electric conducting members of adjacent rows are also overlapping in axial direction of the electric stunner device and transport unit.

According to one embodiment of the electric stunning apparatus according to the present invention, the respective rigid electric conducting members of adjacent rows are positioned with an offset in transversal direction of the electric stunning device and transport unit, the offset corresponding at least to the width of the rigid electric conducting members.

In accordance with one embodiment of the electric stunning apparatus according to the present invention, the rigid electric conducting members have a curved axial profile and the second free axial distal end ending in a plane deviating from the vertical plane with an angle towards a subsequent row of rigid electric conducting members, seen in moving director of the transport unit.

According to one embodiment of the electric stunning apparatus according to the present invention, the rigid electric conducting members are provided or manufactured with a weight or adjustable pivoting point at a first body section forming the first axial distal end, enabling the balanced weight.

In accordance with one embodiment of the electric stunning apparatus according to the present invention, the weight is integrated, exchangeable or adjustably arranged to the first body section forming the first axial distal end of the rigid electric conducting member.

According to one embodiment of the electric stunning apparatus according to the present invention, the rigid electric conducting members in addition has a curved profile in the axial direction enabling balanced weight about the pivoting point.

In accordance with one embodiment of the electric stunning apparatus according to the present invention, the rigid electric conducting members have both a curved profile in the axial direction and a weight or adjustable pivoting point, or a combination thereof, enabling balanced weight about the pivoting point thereof.

According to one embodiment of the electric stunning apparatus according to the present invention, the rigid electric conducting member has a curved profile in the axial direction thereof extending on one or both sides of an axial center axis through the pivoting point.

In accordance with one embodiment of the electric stunning apparatus according to the present invention, the electric stunning apparatus comprises first and second rigid electric conducting members arranged in alternating rows. The first and second rigid electric conducting members have different curvatures in the axial direction, wherein the rigid electric conducting members of a preceding row, seen in moving direction of the transport unit, have a curvature and length positioning the second free distal end thereof in close vicinity of the second free distal end of the second rigid electric conducing members of a subsequent row, in initial state, i.e. prior to being affected by an aquatic animal transported on the transport unit.

According to one embodiment of the electric stunning apparatus according to the present invention, the rigid electric conducting members of alternating rows are positively and negatively charged, or arranged positively or negatively charged in a desired pattern.

In accordance with one embodiment of the electric stunning apparatus according to the present invention, the respective row of rigid electric conducting members are configured to apply a current/voltage of different properties, such as different current/voltage level, as well as after desired patterns. This can further be configured in combination with the alternatives for negatively and positively charged rigid electric conducting members, as well as combined in desired patterns.

According to one embodiment of the electric stunning apparatus according to the present invention, the rigid electric conducting members of alternating rows have the same, alternating or varying distance between them. This can also be combined with different properties for current/voltage and/or positively and negatively charged rigid electric conducting members.

In accordance with one embodiment of the electric stunning apparatus according to the present invention, the rigid electric conducting members are displaced in transversal direction by means of non-conductive spacers.

According to one embodiment of the electric stunning apparatus according to the present invention, there is a distance from a first axial distal end of the transport unit to the first row of rigid electric conducting members, wherein the distance is configured according to the specie to be anesthetized.

In accordance with one embodiment of the electric stunning apparatus according to the present invention, the pivoting point of the rigid electric conducting member has an elongated shape extending in horizontal direction, vertical direction, or a combination thereof, of the first axial distal end of the rigid electric conducting member.

In an alternative embodiment of the electric stunning apparatus according to the present invention, the rigid electric conducting member is arranged to a shaft of the respective row via a connection interface having an elongated recess extending in horizontal direction, vertical direction, or a combination thereof.

According to a further alternative embodiment of the electric stunning apparatus according to the present invention, a combination of a connection interface and pivoting point with elongated shape is used.

By these three latter embodiments is enabled that the rigid electric conducting member may move a restricted distance in the horizontal plane, vertical plane, or a combination thereof, under affection of an aquatic animal.

By the present invention is provided an electric stunner apparatus for dry/in air electric stunning for anesthetizing an aquatic animal, hereunder fish and crustaceans, providing full control of the exposure time of the electric field strength applied to the aquatic animal in the electric stunning phase.

The present invention further provides an electric stunning apparatus ensuring that electric field contact with the aquatic animal is maintained during the entire electric stunning phase.

The electric stunning apparatus according to the present invention further has a wide area of use and will be able to handle differently sized aquatic animals.

Moreover, the electric stunning apparatus according to the present invention further enables controllable exposure time in the electric stunning phase.

Moreover, control of the stunning strength and exposure time ensures control of the impact on the fish quality by electrical stunning.

Moreover, the electric stunning apparatus according to the present invention is more compact and less space-demanding than prior art apparatuses.

Further preferable features and advantageous details will appear from the following example description.

### Example

The present invention will below be described in further detail with reference to the attached drawings, where:
Fig. 1 is a principle drawing of an electric stunner apparatus according to state of art,
Fig. 2a-g are principle drawings of an electric stunning apparatus according to a first embodiment of the present invention,
Fig. 3a-f are principle drawings of an electric stunning apparatus according to an alternative embodiment of the present invention,
Fig. 4a-c are principle drawings showing additional features of rigid electric conducting members of an electric stunning apparatus according to the present invention,
Fig. 5a-d are principle drawings showing a time-laps of interaction between a rigid electric conducting member and an aquatic animal,
Fig. 6 is a principle drawing showing further details of an electric stunner apparatus according to the present invention., and
Fig. 7a-f is principle drawings of further alternative embodiments of rigid electric conducting members of an electric stunning apparatus according to the present invention.

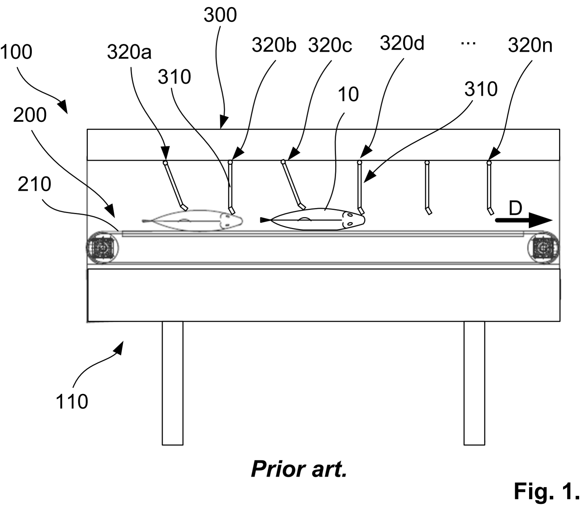

Reference is now made to Fig. 1 showing a principle drawing of an electric stunner apparatus 100 configured for electrically stunning an aquatic animal 10, typically fish or crustaceans, according to prior art. The electric stunner apparatus 100 comprises a controllable transport unit 200 , such as a conveyer belt 210, and an electric stunner device 300 comprising multiple rows 320a-n of electric conducting members 310 (also referred to as electrodes) positioned in a parallel plane above the transport unit 200, configured such that, when an aquatic animal 10 is moved by the transport unit 200 in direction indicated by arrow D, the aquatic animal 10 comes into contact with the electric conducting members 310 and becomes electrically stunned. The mentioned electric conducting members 310 may be of different configurations, as disclosed in the referenced prior art. Different configurations are used for electrically stunning the aquatic animal 10. One application is where the aquatic animal 10 must be in contact with two adjoining rows 320a-n of electric conducting members 310 to be electrically stunned and where the transport unit 200 is isolated, as shown in the example. Another application is where the transport unit 200 is not isolated and constitutes an electric conducting member (electrode) in the electric stunner device 300 and where the aquatic animal 10 will only have to be in contact with one of the rows 320a-n of electric conducting members 310 to be electrically stunned. The electric stunner apparatus 100 is typically arranged on a support structure 110 to adapt it inline in a slaughtering line, treatment line or similar. A disadvantage with such a solution is that the distance between the transport unit 200 and electric conducting members 310 are fixed. A problem with that is that it is not ensured that the animal 10 will be in physical contact with at least one rigid electric conducting members 310 during the entire electric stunning phase by that one cannot ensure that the next row 320a-n of electric conducting members 310 is contact with the animal 10 when it leaves the preceding row 320a-n. Another disadvantage is that the rigid electric conducting members 310 will apply their full weight on the animal 10, something that could result in that smaller animals 10 are retained and prevented from or delay in being moved in the movement direction D of the transport unit 200.

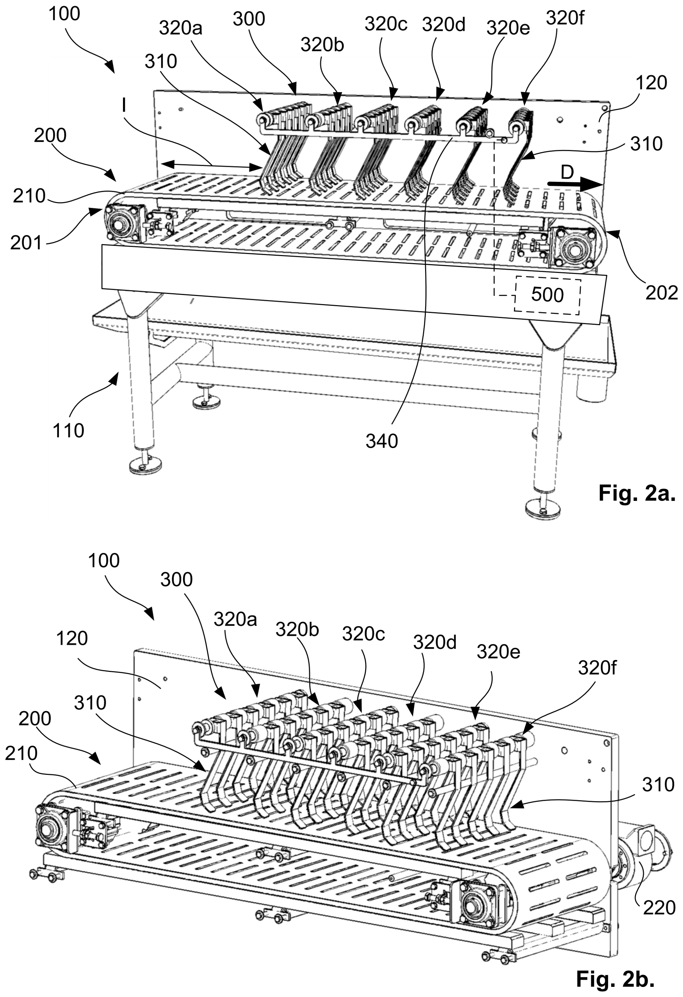

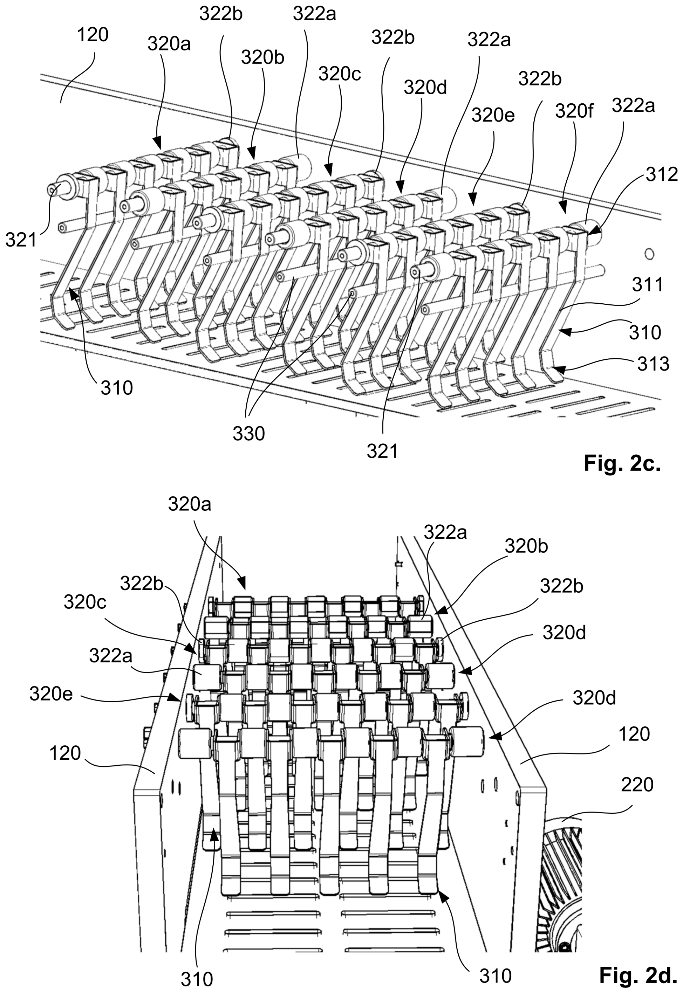

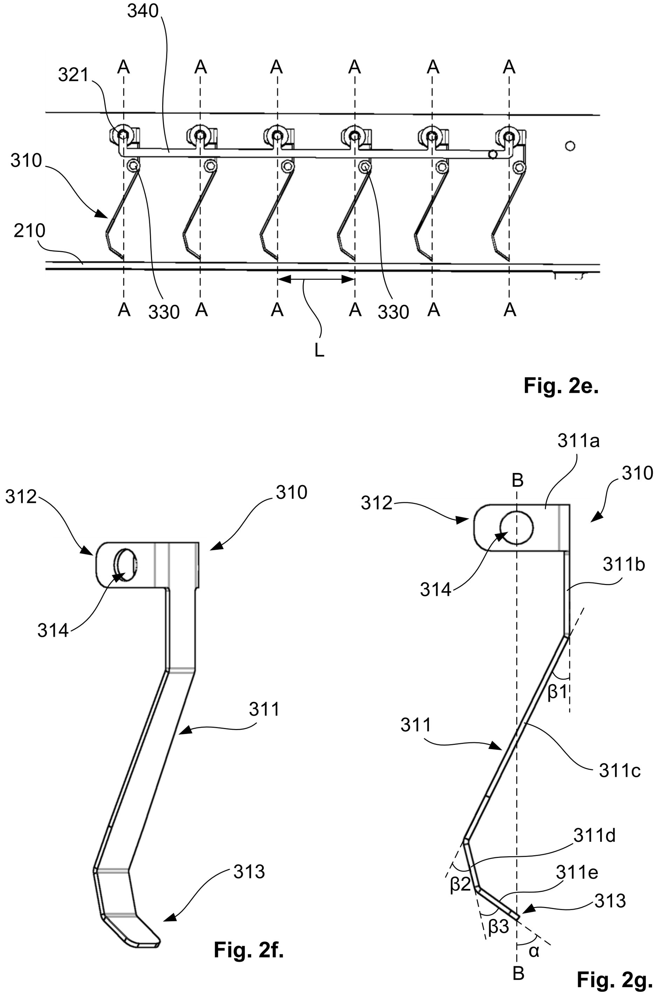

Reference is now made to Fig. 2a-g showing principle drawings of a first embodiment of an electric stunning apparatus 100 according to the present invention configured for electrically stunning an aquatic animal 10, hereunder fish or crustaceans. The shown embodiment of the electric stunning apparatus 100 comprises a controllable transport unit 200, such as a conveyer belt 210, powered by at least one controllable motor 220, such as an electric motor. The transport unit 200 has a first axial distal end 201 (inlet end) and a second axial distal end 202 (outlet end). The electric stunner apparatus 100 according to the present invention further comprises an electric stunner device 300 positioned in a parallel plane above the transport unit 200. In the shown embodiment the mentioned plane is extending in the horizonal. However, this is not to be considered as limiting for the present invention, as the mentioned parallel plane may also be inclined in relation to the horizontal, i.e. for both the transport unit 200 and electric stunner device 300. The electric stunning device 300 according to the shown embodiment comprises multiple rigid electric conducting members 310 arranged pivotable in at least one row 320a-n. In the shown embodiment, the electric stunning device 300 comprises multiple rows 320a-n, wherein n is an integer number larger than 1 and corresponds to the total number of rows. However, the electric stunning device 300 according to the present invention may comprise any number of rows 320a-n from one and upwards. In the shown example there are six rows 320a-f. The number of rows 320a-n can be both higher and lower than six. The rows 320a-n are distributed in axial direction of the electric stunning apparatus 100/transport unit 200 with a distance L (Fig. 2e) between them in axial direction of the electric stunning apparatus 100/transport unit 200. In accordance with one embodiment of the electric stunning device 300 according to the present invention, the distance L between adjacent rows 320an is the same. In an alternative embodiment, the distance L between adjacent rows 320a-n are different or alternating different. E.g. according to one example, row 320n to 320n+1 have one distance L1 while rows 320n+1 to row 320n+3 have another distance L2, and so on. A configuration as described can be beneficial to ensure a sufficient initial stun with electrode rows 320a-n closely together and then a more gentle prolonged stun by electrode rows 320a-n with larger distance between them as to not impact quality of the animal.

In accordance with one embodiment of the present invention, the distance between the rows 320an being contact with the aquatic animal 10 first, may have shorter distance between them than rows 320b-n further down in the axial direction of the electric stunner device 100. In this manner, one ensures high anesthetizing effect by the shorter distance, and next prevents less/lower powerful electric field after the initial anesthetizing by the larger distance to prevent exposing the aquatic animal 10 too much.

According to one embodiment of the present invention, the rigid electric conducting members 310 of subsequent rows 320a-n have different properties as regards applied current/voltage. In accordance with one embodiment, the rigid electric conducting members 310 of the rows 320a-n coming into contact with the aquatic animal 10 first, have higher current/voltage than rigid electric conducting members 310 of rows 320b-n farther down in axial direction. In this manner, one ensures high anesthetizing effect by the initial higher current/voltage, and next prevents too powerful electric field after the initial anesthetization by the relatively lower current/voltage to prevent exposing the aquatic animal 10 too much.

In accordance with a further embodiment of the present invention, the rigid electric conducting members 310 of subsequent rows 320a-n have different properties by a combination of different distance and/or applied current/voltage, or a combination thereof.

In accordance with one embodiment of the electric stunner device 300 according to the present invention, the first row 320a is positioned a distance I from the first axial distal end 201 of the transport unit 200 to ensure that the whole aquatic animal 10 is in contact with the transport unit 200/belt 210 and free from any preceding process equipment. The mentioned distance I will vary/be configured according to the specie of aquatic animal 10 to be anesthetized.

For arrangement of the mentioned multiple rigid electric conducting members 310 in rows 320a-n, the electric stunning device 300 comprises one shaft 321 per row 320a-n, wherein the respective shaft 321 extends in transversal direction of the electric stunning device 300 and transport unit 200, which shaft 321 is arranged in a parallel horizontal plane above the transport unit 200. The mentioned shafts 321 are fixed at distal axial ends thereof to axially extending side structures 120 at both longitudinal sides of the electric stunning apparatus 100.

The respective rigid electric conducting member 310 is arranged to the respective shaft 321 by a pivoting point 314 configured at a first axial distal end 312 thereof and with a second free axial distal end 313 positioned in close vicinity of the transport unit 200, but not in contact with the transport unit 200. The mentioned pivoting point 314 is, e.g., formed by a through hole in the body 311 of the rigid conducting member 310. In the shown embodiment the body 311 at the first axial distal end 312 is L-shaped and where the pivoting point 314 is displaced along/arranged in the short leg thereof.

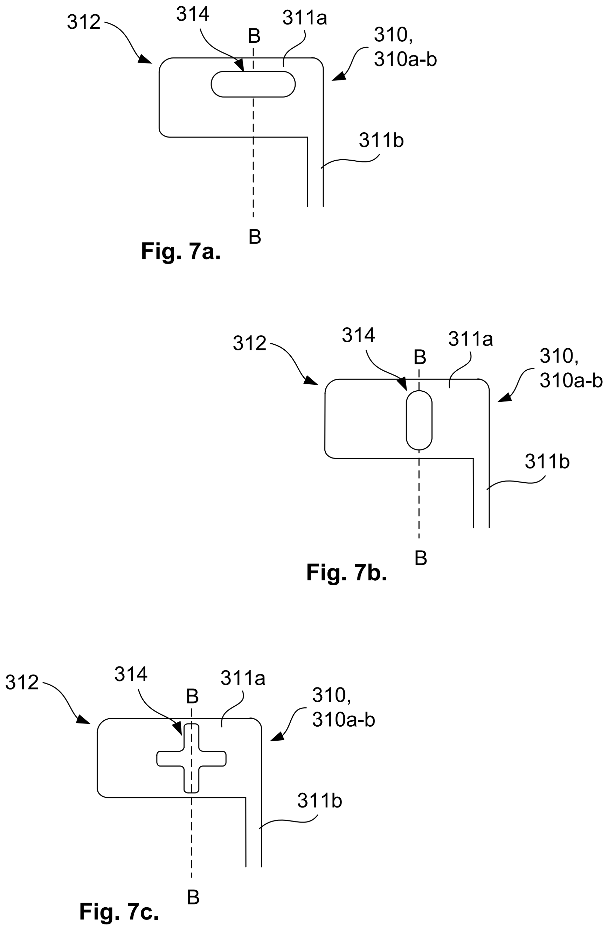

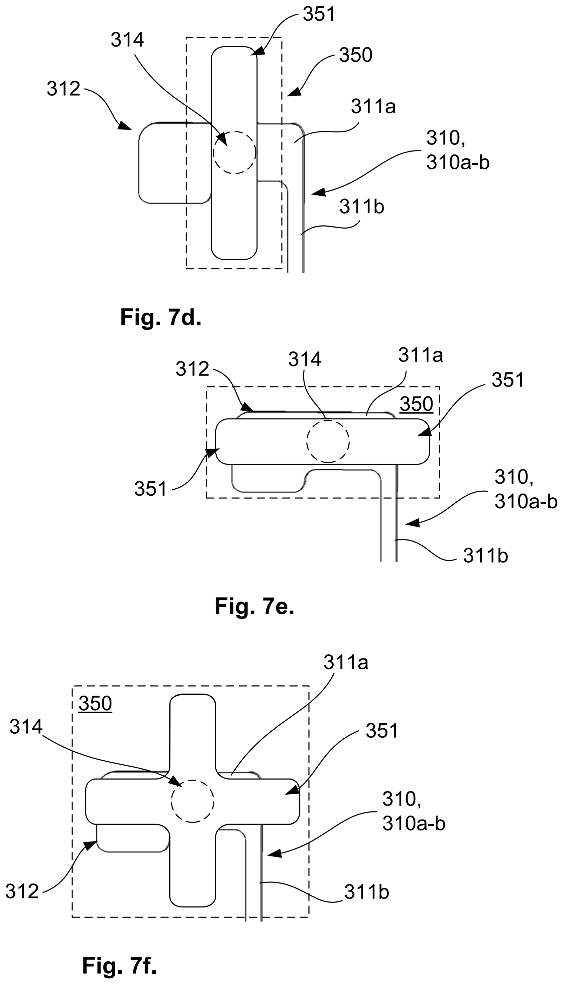

Accordingly, the mentioned pivoting point 314, such as a through hole, is configured to receive and accommodate the mentioned shaft 321 for arranging the rigid electric conducting members 310 pivotably thereto, and such that the second free axial distal end 313 is positioned a desired distance above, seen in the vertical plane, the transport unit 200. As will be described further below with reference to Fig. 7a-f, the pivoting point 314 may have different shapes or the pivoting point 314 may be arranged to the mentioned shaft 321 via a connection interface 350.

When an aquatic animal 10 is moved by the transport unit 200 in direction D indicated by the arrow, the aquatic animal 10 comes into contact with the rigid electric conducting members 310 and becomes electrically stunned. Due to the rigid electric conducting members 310 being pivotable this will allow the aquatic animal 10 to be moved while electric contact between the aquatic animal 10 and at least some of the rigid electric conducting members 310 is ensured during the entire electric stunning phase, further described below.

In the shown embodiment, the rows 320a-n according to the first embodiment of the present invention are provided with alternating numbers of rigid electric conducting members 310. Accordingly, in the first embodiment, rows 320a, c, e, ... n comprise one more rigid electric conducting member 310 than the respective following rows 320b, d, f, ... n+1, or vice versa. In the shown embodiment, the rigid electric conducting members 310 of the respective row 320a-n are displaced in the axial direction of the mentioned shaft 321 and transversal direction of the electric stunning apparatus 100/transport unit 200 by non-conductive spacers 322a-b. The non-conductive spacers 322a have a width that is larger than the width of the rigid electric conducting member 310 ensuring that there is space between the respective rigid electric conducting members 310 to allow the rigid electric conducting members 310 of preceding rows 320a-n to pivot due to contact with the aquatic animal 10 without coming into contact with rigid conducting members 310 of following/subsequent rows 320a-n. The non-conductive spacers 322a are further also for every second row 320b, d, f, ... n+1 configured to ensure that the rigid conducting members 310 being closest to the side structures 120 are spaced from and not in physical contact with the respective side structures 120, allowing them to pivot freely. The non-conductive spacers 322a further ensure that there is no direct electric contact between the adjoining rigid electric conducting members 310 on the same shaft 321. The non-conductive spacers 322b are configured to ensure that the rigid conducting member 310 being closest to the side structures 120 for every second row 320a, c, e, ..., n is spaced from and not in contact with the respective side structure 120 allowing them to pivot freely.

Accordingly, in the first embodiment, the rigid electric conducting members 310 of rows 320a, c, e, ..., n are aligned in transversal direction of the electric stunner apparatus 100, and the rigid electric conducting members 310 of rows 320b, d, f, ..., n+1 are aligned in transversal direction of the electric stunner apparatus 100.

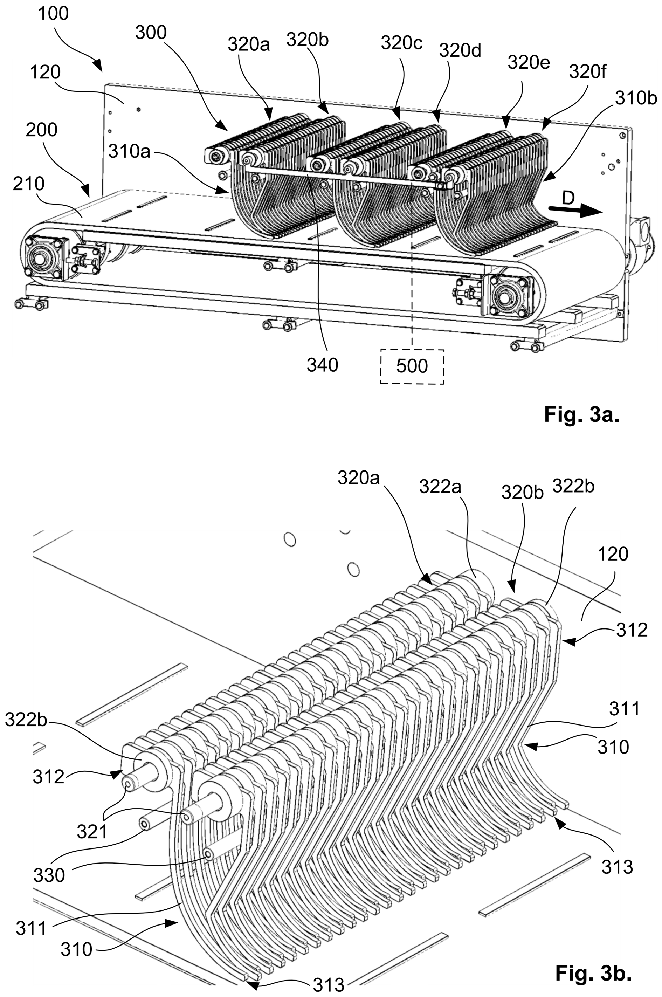

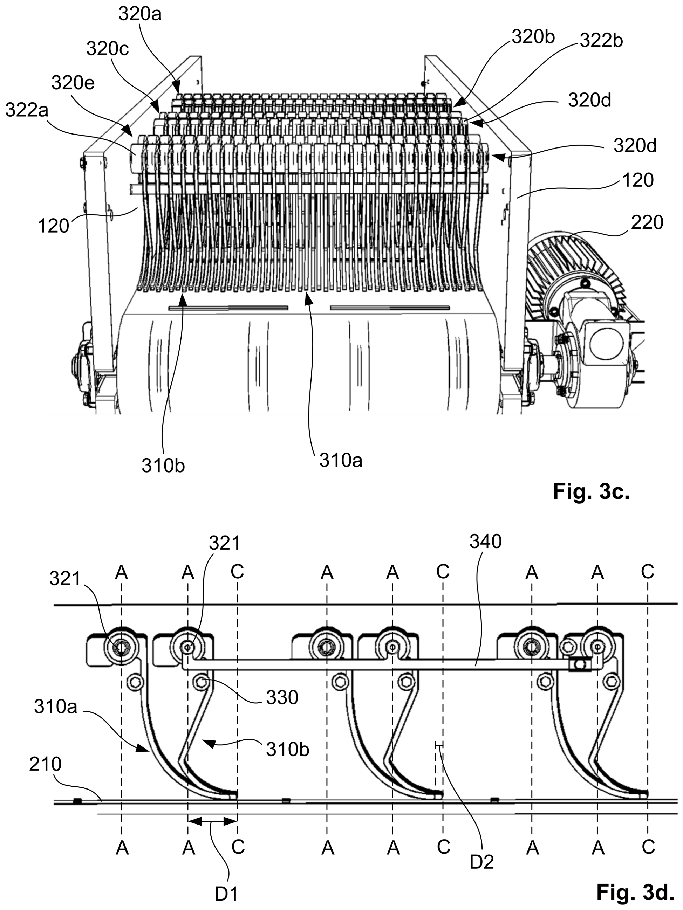

In accordance to a further embodiment of the electric stunner apparatus 100 it comprises movement-limiting non-conductive members 330 associated with each of the rows 320a-f, the movement-limiting non-conductive members 330 being configured to limit the pivotable range of the rigid electric conducting members 310. In the shown embodiment, the movement-limiting non-conductive members 330 are formed by bars or rods extending in transversal direction in a parallel horizontal plane above the transport unit 200 and fixed at both axial ends to the side structures 120 of the electric stunner apparatus 100. In the shown embodiment, the movement-limiting non-conductive members 330 are arranged below the horizontal plane of the shafts 321. Depending on the shape of the rigid electric conducting members 310, the movement-limiting non-conductive members 330 are displaced in axial and vertical direction of the electric stunning apparatus 100/transport unit 200, in relation to the vertical center axis A-A through shaft 321. In the shown embodiment, the movement-limiting non-conductive members 330 are positioned such that the rigid electric conducing member 310, in initial/unmoved position, is positioning the second free axial distal end 313 at the mentioned vertical center axis A-A. In this manner, the rigid electric conducting member 310 is prevented from pivoting behind this point, seen in axial direction of the electric stunning apparatus 100, i.e. moving direction. The mentioned rigid electric conducting members 310 are thus allowed to pivot in the axial/moving direction of the transport unit 200, but will not pivot back in the opposite direction beyond the mentioned vertical center axis A-A. By that the movement-limiting non-conductive members 330 are non-conductive, the rigid electric conducting members 310 are not in electric contact with the side structures 120 of the electric stunner apparatus 100. In an alternative embodiment, the movement-limiting non-conductive members 330 are integrated with the shaft 321 and/or first axial distal end 312 of the rigid electric conducting member 310, achieving the same stop/limiting function as the mentioned rods or bars. Other alternatives for limiting the pivoting range of the rigid electric conducting members 310 will be within the knowledge of a skilled person. As will be described below with reference to Fig. 3a-f the pivoting range of rigid electric conducting members 310 of adjoining rows 320a-n can be different.

Reference is now made to Fig. 2fg showing principle drawings of a rigid conducting member 310 suitable for the first embodiment of the electric stunner apparatus 100. The rigid electric conducting member 310 has a curved axial profile and the second free axial distal end 313 is ending in a plane deviating from the vertical plane with an angle α towards a following row 320n+1 of rigid electric conducting members 310, seen in moving director of the transport unit 200. The angle α is, but not limited to, larger than 0 degrees and lower than 180 degrees, preferably lower than 120 degrees, ensuring that a larger area of the rigid electric conducting member 310 will be in contact with the aquatic animal 10 and thus improved physical/electric contact is achieved. To achieve that the second free axial distal end 313 is positioned at the vertical center axis A-A, the axial curved profile of the body 311 of the rigid electric conducting member 310 extends at both sides of the an axial center axis B-B through the pivoting point 314. In the shown embodiment, the L-shaped first axial distal end 312 is formed by a first body section 311a extending in the horizontal plane with the mentioned pivoting point 314 and a second body section 311b extending in the vertical plane mainly perpendicularly downwards from the mentioned first body section 311a by a first end. The body 311 further comprises a third body section 311c extending from the second end of the second body section 311b with a first end and extending in a vertical plane deviating with an angle β1 from the axial direction of the second body section 311b, in the direction of the first body section 311a. The body 311 further comprises a fourth body section 311d that is extending in a vertical plane deviating with an angle β2 from the vertical plane of the third body section 311c, in the opposite direction of the third body section 311c and towards the axial center axis B-B. The body 311 further comprises a fifth body section 311e ending in the mentioned second free axial distal end 313, which fifth body section 311e extends in the axial direction with an angle β3 from the axial direction of the fourth body sections 311d and further towards and to the axial center axis B-B. The mentioned body sections 311a-e can be formed by, e.g., buckling so that it is formed as one piece.

The increasing width of the electric conducting member 310 shown in Fig 2f. ensures that, when the electric conducting members 310 are distributed in the transversal direction of the electric stunner device 300, i.e. in axial direction of the shaft 321, the rigid electric conducting members enable continuous applying of the electric field strength to the transported aquatic animal 10, due to the rigid electric conducting members 310 of the rows 320a-n together form an total electric conducting member across the transport unit 200 with spacings therebetween being smaller than the size of the aquatic animal 10. By this is ensured physical/electric contact with the aquatic animal 10 transported thereon at all time.

The curvature of the body 311 can be formed by different shapes and numbers of body sections 311a-e, as well as the curvature of the respective rigid electric conducting member 310 may be different from each other to adapt to the respective specie of aquatic animal 10 to be anesthetized. In further alternative embodiments, the second free distal end 313 has an extension that is beyond or behind the mentioned axial center axis B-B. In the embodiment of Fig. 2a-g, the body 311 of the rigid electric conducting members 310 have a mainly rectangular cross-section with a desired width. As will be described in an alternative embodiment below, the body 311 may be formed by curved parts and fewer or more body sections 311a-e than is shown in Fig. 2a-g. The angles β1-β3 will typically be, but not limited to, larger than 0 degrees and lower than 90 degrees, preferably lower than 45 degrees. In accordance with a non-limiting example, the angles β2 and β3 are within 20-35 degrees, and the angle β1 is between 0-45 degrees. The angles will depend on the size and shape of the aquatic animal 10 to be anesthetized. This will also be dependent on whether or not it is required to provide the rigid electric conducting members 310 with balanced weight if required, as will be discussed in further detail below, especially if the aquatic animal 10 has low weight risking that the aquatic animal 10 is retained by the rigid electric conducting members 310.

In accordance with a further embodiment of the present invention, the curvature of the rigid electric conducting members 310 can be configured according to size/specie of aquatic animal 10 for all the embodiments of the present invention. Similarly, also the thickness and/or width of the rigid electric conducting members 310 can be configured according to the size/specie of aquatic animal 10 for all the embodiments of the present invention.

In accordance with the present invention, the rigid electric conducting members 310 are supplied with desired AC, DC or combined DC and AC power from a common controllable electric power supply source 500 by that the mentioned shafts 321 are electrically connected to a common electric connection member 340 connected to the controllable electric power supply source 500. In alternative embodiments two or more controllable electric power supply sources 500 may be used and connected to one or more rows 320a-n with electric conducting members 310 to supply a desired AC, DC or combined DC and AC power. In yet a further embodiment, the electric stunner apparatus 100 comprises two or more controllable electric power supply source 500 for redundancy.

In the shown embodiment, the aquatic animal 10 will have to be in contact with rigid electric conducting members 310 of two adjacent rows 320a-f to be electrically stunned. The transport unit 200 is thus isolated and non-conductive. In an alternative embodiment the transport unit 200 is conductive and the aquatic animal 10 only needs to be in contact with rigid electric conducting members 310 of one row 320a-f to be electrically stunned.

Reference is now made to Fig. 3a-f showing an alternative embodiment of the electric stunner device 300 according to the present invention, wherein the electric stunner device 300 comprises first 310a and second 310b rigid electric conducting members pivotably arranged in alternating rows 320a-n by means of respective shafts 321. As for the first embodiment, the electric stunner device 300 in this embodiment is also shown with six rows 320a-f. However, the number of rows may be both higher and lower than six. In the alternative embodiment, two and two rows 320a-f are arranged in pairs with overlapping rigid electric conducting members 310a-b, further described below. In accordance with the shown embodiment, the first 310a and second 310b rigid electric conducting members of two adjoining rows 320a-b, 320c-d and 320e-f are forming pairs of overlapping rigid electric conducting members 310a-b distributed in axial direction of the electric stunner apparatus 100/transport unit 200.

In the alternative embodiment, the first 310a and second 310b rigid electric conducting members have a different shapes and axial extension. The first 310a and second 310b rigid electric conducting members are further arranged so that they extend towards a vertical plane C-C displaced a distance D1 from the vertical plane A-A in the axial direction of the electric stunning device 300/transport unit 200, seen in the axial/moving direction D of the transport unit 200. In this manner the second free axial distal ends 313 of the second 310b rigid electric conducting members are positioned at the vertical plane C-C and the second free axial distal ends 313 of the first rigid electric conducting members 310a in vicinity of or at the vertical plane C-C, as shown in Fig. 3a-f. In accordance with the shown embodiment, the second free axial distal end 313 of the first rigid conducting member 310a is positioned at a vertical plane displaced a distance D2 from the vertical plane C-C, in the axial direction of the electric stunning device 300/transport unit 200, in the opposite direction of the moving direction of the transport unit 200.

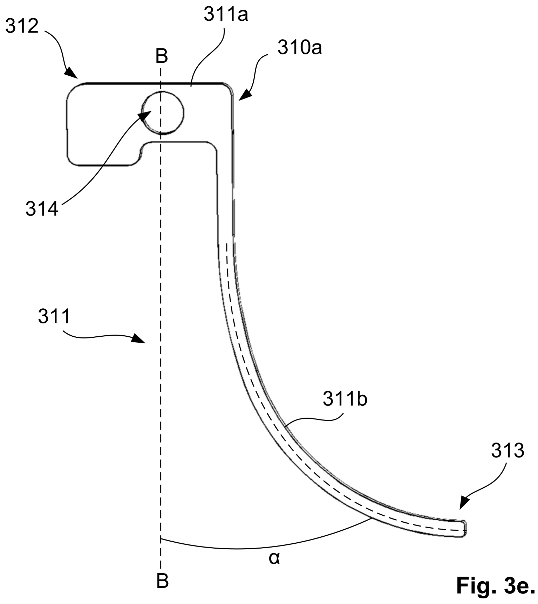

Reference is now made to Fig. 3e showing details of the first rigid electric conducting member 310a of rows 320a, c and e. The rigid electric conducting members 310a have a curved axial profile and the second free axial distal end 313 is ending in a plane deviating from the vertical plane with an angle α towards a following row 320n+1 of rigid electric conducting members 310, seen in axial direction of the electric stunner device 300/transport unit 200, in the moving direction of the transport unit 200. The angle α is, but not limited to, larger than 0 degrees and 90 degrees or lower, ensuring that a larger area of the rigid electric conducting member 310a will be in contact with the aquatic animal 10 and thus improved physical/electric contact is achieved. To achieve that the second free axial distal end 313 is positioned at the vertical plane C-C or at a distance D2 from the vertical plane C-C, the axially curved profile of the body 311 of the rigid electric conducting member 310a extends only at one side of the axial center axis B-B through the pivoting point 314. As the first embodiment, the L-shaped first axial distal end 312 is formed by a first body section 311a extending in the horizontal plane with the mentioned pivoting point 314 and a second body section 311b extending in the vertical plane initially mainly perpendicularly downwards from the mentioned first body section 311a by a first end. The second body section 311b extends first mainly linearly before ending in a curved section with a desired radius of curvature.

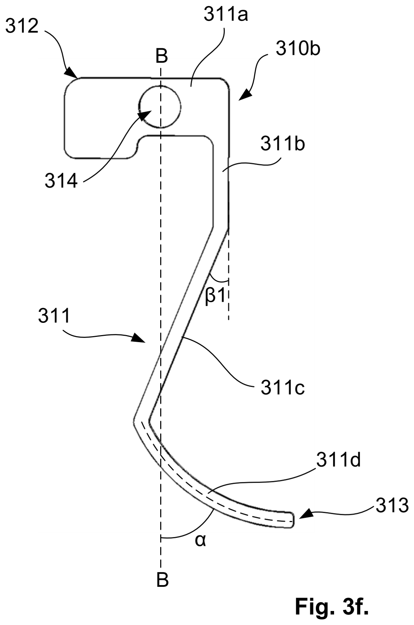

Reference is now made to Fig. 3f showing details of the second rigid electric conducting members 310b of rows 320b, d, and f. The rigid electric conducting members 310b have a curved axial profile and the second free axial distal end 313 is ending in a plane deviating from the vertical plane with an angle α towards a following row 320n+1 of first rigid electric conducting members 310a, seen in axial direction of the electric stunner device 300/transport unit 200, in the moving direction of the transport unit 200. The angle α is, but not limited to, larger than 0 degrees and 90 degrees or lower, ensuring that a larger area of the second rigid electric conducting member 310b will be in contact with the aquatic animal 10 and thus improved physical/electric contact is achieved. To achieve that the second free axial distal end 313 is positioned at the vertical plane C-C, the axial curved profile of the body 311 of the rigid electric conducting member 310b extends at both sides of the axial center axis B-B through the pivoting point 314. In the shown embodiment, the L-shaped first axial distal end 312 is formed by a first body section 311a extending in the horizontal plane with the mentioned pivoting point 314 and a second body section 311b extending in the vertical plane mainly perpendicularly downwards from the mentioned first body section 311a by a first end. The body 311 further comprises a third body section 311c extending from the second end of the second body section 311b with a first end and extending in an axial direction deviating with an angle β1 from the axial direction (vertical plane) of the second body section 311b, in the axial direction of the first body section 311a. The body 311 further comprises a fourth body section 311d that is curved with a desired radius of curvature, and is extending in a vertical plane deviating from the third body section 311c, in the opposite direction of the axial extension of the third body section 311c and extending towards the vertical plane C-C ending in the second free axial distal end 313.

As for the first embodiment, also the body 311 of the first 310a and second 310b rigid electric conducting members have a mainly rectangular cross-section with a desired width. As can be seen in Fig. 3a-d, the total number of rigid electric conducting members 310a-b per row 320a-n is considerably higher and the width thereof considerably shorter, compared to the first embodiment.

In the embodiment of Fig. 3a-f only the rows 320b, d and f comprising the second rigid electric conducting members 310b are coupled to the common controllable electric power supply source 500 by that the mentioned shafts 321 being electrically connected to common electric connection member 340 connected to the controllable electric power supply source 500. Accordingly, in this embodiment, the second rigid electric conducting members 310b form positive electric conducting members while the first rigid electric conducting members 310a form negative electric conducting members. In an alternative embodiment, the first conducting members 310a of the rows 320a, c and e are connected to the electric connection member 340 and the controllable electric power supply source 500 to form positive electric conducting members, while the second conducting members 310b of rows 320b, d and f from negative electric conducting members. In a further alternative embodiment, the first 310a and second 310b within the respective pair may be of different configurations as regards which of the first 310 or second 310b electric conducting members that form positive or negative conducting members.

In the shown embodiment, the aquatic animal 10 will at all the time be in contact with rigid electric conducting members 310a-b of two adjacent rows 320a-f enabling the aquatic animal 10 to be electrically stunned. The transport unit 200 is thus isolated and non-conductive.

In alternative embodiments of the electric stunning apparatus 100 according to the present invention, the transport unit 200 is not isolated and constitutes an electric conducting member (electrode) in the electric stunner device 300 and where the aquatic animal 10 will only have to be in contact with one of the rows 320a-n of rigid electric conducting members 310, 310a-b to be electrically stunned.

By means of the present invention having overlapping rigid electric conducting members 310, 310a-b, the aquatic animal 10 will be in physical engagement/electric contact with the rigid electric conducting members 310, 310a-b of a following row 320n+1 before the animal leaves the rigid electric conductors 310, 310a-b of row 320n. Accordingly, ensuring that the aquatic animal 10 at all time is in electric field contact for anesthetization in air (dry anesthetizing or electronarcosis). Accordingly, by the present invention, even if the length of the aquatic animal 10 is shorter than the length between two rows 320a-f of rigid electric conducting members 310, 310a-b, electric field contact is achieved due to the rigid electric conducting members 310, 310a-b of adjacent rows 320a-f overlap. In this manner one will achieve controlled exposure time for electric field in the electric stunning phase for the aquatic animal 10.

The use of overlapping rigid electric conductors 310, 310a-b further results in that the total length of the electric stunner apparatus 100 will be shorter, compared to prior art solutions, due to that the rows 320a-n can be arranged with shorter distance between each other. Accordingly, the electric stunner apparatus 100 according to the present invention will be less space-demanding than prior art solutions.

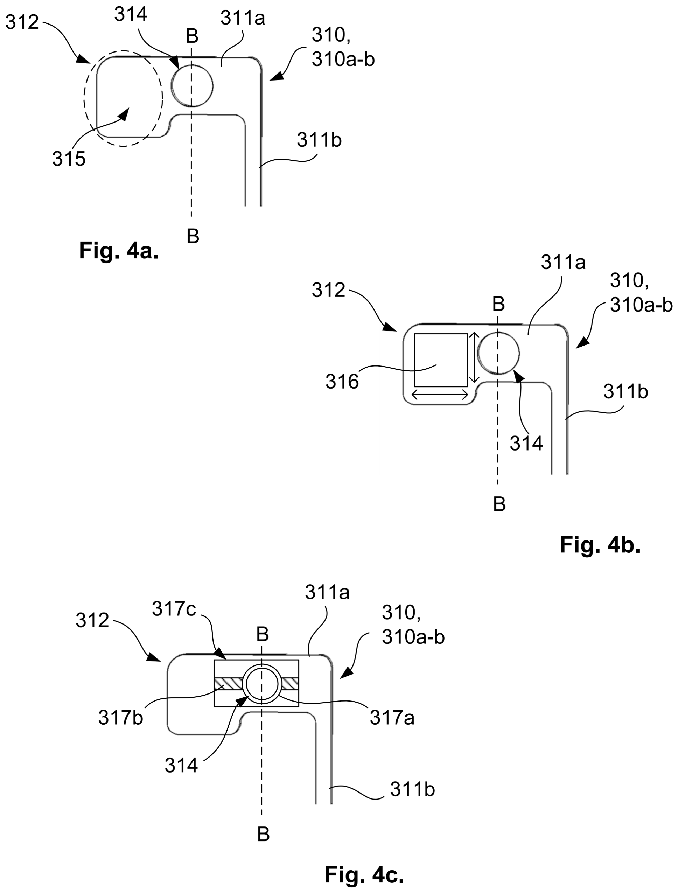

Reference is now made to Fig. 4a-c showing details of rigid electric conducting members 310, 310a-b according to alternative embodiments of the present invention. In accordance with one embodiment of the electric stunning apparatus 100 according to the present invention, the mentioned rigid electric conducting members 310, 310a-b of each or at least some rows 320a-f are formed by rigid electric conducting members 310, 310a-b with balanced weight about the pivoting point 314 requiring minimum moment for pivoting the rigid electric conducting member 310, 310a-b. This can be achieved in several ways. In accordance with one embodiment, the L-shaped first axial distal end 312 is prefabricated with a section 315 adding weight behind the pivoting point 314, as shown in Fig. 4a. In Fig. 4b is shown an embodiment where a fixed or exchangeable at least one weight 316 is mounted to the first axial distal end 312, behind the pivoting point 314. In accordance to a further embodiment of the present invention, the mentioned fixed or exchangeable at least one weight 316 is arranged adjustably to the first axial distal end 312, adjustable in vertical and/or horizontal direction thereof, enabling adjustment of the balance point thereof. In accordance with a further embodiment of the rigid electric conducting member 310, 310a-b, the mentioned pivoting point 314 is arranged adjustable in axial direction of the first body section 311a. E.g. this can be achieved by using a sleeve 317a, configured to accommodate the mentioned shaft 321, adjustable by a linear adjustment mechanism 317b arranged in a recess 317c in the first axial distal end 312. In this manner the sleeve 317a and thus pivoting point 314 may be adjusted in axial direction of the first body section 311a enabling adjustment of the balance point. In accordance with a further embodiment of the present invention, the rigid electric conducting member 310, 310a-b is provided with a combination of two or more of the mentioned methods for controlling the balance point. In this manner the rigid electric conducting member 310, 310a-b may be adjusted so that the required moment to pivot the rigid electric conducting member 310, 310a-b on the shaft 321 is as low as possible. In this manner, aquatic animals 10 of low weight will be able to overcome the required moment due to lower force is required to pivot the rigid electric conducting member 310, 310a-b.

Further, as described above, the balance point can be adjustable, enabling the required moment to be adjusted depending on the size/weight and/or specie of the aquatic animal 10 to be electrically stunned by the electric stunner apparatus 100 according to the present invention. In this manner, the aquatic animal 10 can be moved/transported through the electric stunning phase without being retained or disturbed, resulting in that one will achieve a controlled exposure time for electric field in the electric stunning phase. Accordingly, the present invention is also be suitable/applicable for smaller/low weight aquatic animals 10 as nephrops, shrimps, tilapia, barramundi, mackerel, etc. in addition to salmon, trout, cod, etc.

Accordingly, the present invention provides/enables the controlled exposure time two different approaches, either by using the described overlapping rigid electric conducting members 310, 310a-b or by using rigid electric conducting members 310, 310a-b with balanced weight, or a combination of the two mentioned approaches. It should be emphasized that the latter solution with balanced weight can be used with rigid electric conducting members 310, 310a-b that are not overlapping.

In this manner the electric stunner apparatus 100 according to the present invention provides controlled exposure time by ensuring that there is electric contact between the aquatic animal 10 and the rigid electric conducting members 310, 310a-b through the entire electric stunning phase and ensuring that the aquatic animal 10 pass through the electric field strength in a controlled manner.

The mentioned rigid electric conducting members 310, 310a-b may be formed by a metal having high electric conductive properties or be formed by a non-conductive material with inserts of electrically conductive material or members in contact surfaces thereof that will engage with the aquatic animal 10, and for connection with the mentioned shaft 321 for connection to the electric power supply source 500. The latter solution opens for that the body 311 of the rigid electric conducting members 310, 310a-b can be 3D-printed or formed by a casting process and wherein the electrically conductive material or members are retrofitted, pre-fitted for die casting or in a similar method (like 3D-printed with several materials in one print). Such a solution will also increase the safety as direct contact with a rigid electric conducting member 310, 310a-b will not result in that one gets an electric shock.

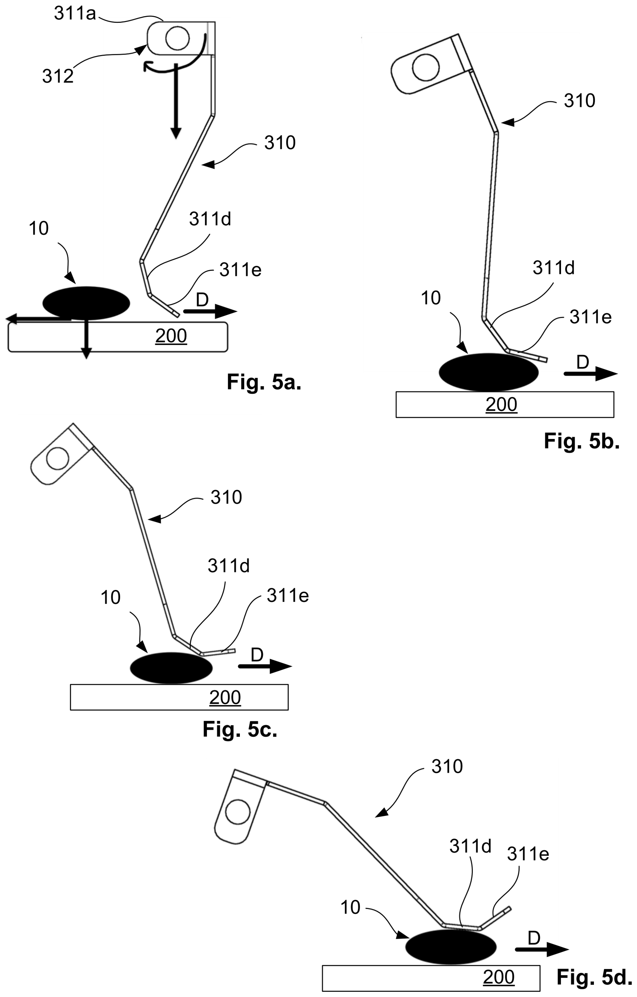

The mentioned curved shape of the rigid electric conducting members 310, 310a-b ensures that there is always a large contact surface with the aquatic animal 10, as e.g. shown in Fig. 5a-d. In Fig. 5a-d is shown a time-lapse showing the contact between an aquatic animal 10 and a rigid electric conducting member 310 of the first embodiment, where the aquatic animal 10 is transported by the transport unit 200. As the time-laps shows, the aquatic animal 10, during the entire process is in electric contact with a large surface of the rigid electric conducting member 310 via the fourth 311d and fifth 311e body sections. In addition to ensuring a large and good physical/electric contact surface, the curvature and/or body sections also ensures that the rigid electric conducting member 310, 310a-b applies a weight on the aquatic animal 10 ensuring improved electric contact therebetween.

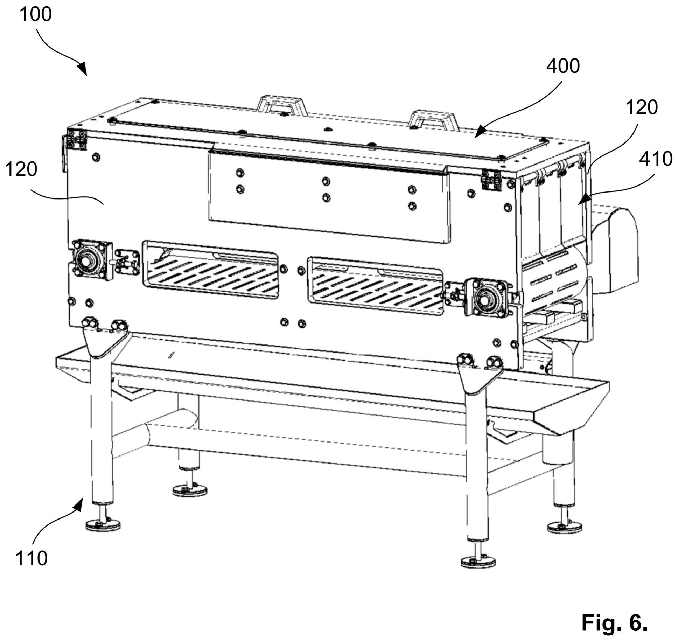

Reference is now made to Fig. 6. The electric stunner apparatus 100 according to a further embodiment of the present invention further comprises a lid 400 attached to the side structures 120, enclosing the electric stunner device 300 for safety and preventing personnel from getting an electric shock. The lid 400 is preferably hinged for easy access to the interior of the apparatus 100. In addition, it may be arranged hinged enclosing members 410 at the outlet and/or inlet ends of the electric stunner apparatus 100 preventing direct contact for personnel with the rigid electric conducting members 310, 310a-b for safety.

In accordance with one embodiment of the electric stunner device 300 according to the present invention, the electric stunner device 300 comprises a combination of the rigid electric conducting members of Fig. 2f and 3e, a combination of the rigid electric conducting members of Fig. 3e and 3f or any combination of those to combine different properties. For instance, in one embodiment, the electric stunner device 300 is configured with rigid electric conducting members 310, 310a-b with more weight on the first 1-3 rows 320a-c slowing down the aquatic animal 10, and then lighter/fewer rigid electric conducting members 310, 310a-b at subsequent/following rows 320d-n in the transport direction of the aquatic animal 10.

According to a further embodiment, the latter embodiment is combined with having a higher number of rows 320a-n with rigid electric conducting members 310, 310a-b upstream in axial direction, i.e. with shorter distance between the rows 320a-n, to also slow down the aquatic animal 10 in the initial phase of movement/initial section in the electric stunning device 300, and followed by rows 320b-n with lager distance therebetween, compared to the distance of the rows 320a-n of the initial phase, i.e. after the aquatic animal 10 has been slowed down.

Accordingly, the distance between the rows 320a-n in the present invention will have more than one purpose, and by adjusting the distance between the rows 320a-n different effects can be achieved, as described above. Accordingly, when designing the electric stunner 300, one will have to consider which effect one desires by the distance between the rows 320a-n. This will also have to be considered in relation to the weight of the rigid electric conducting members 310, 310a-b.

In accordance with a further embodiment of the electric stunning device 300 according to the present invention, the axial length of the rigid electric conducting members 310, 310a-b are adapted/configured according to the size and/or specie of the aquatic animal 10.

According to a further embodiment of the present invention, the length of rigid electric conducting members 310, 310a-b are designed according to animal size and physiology. Accordingly, the vertical gap/spacing between the transport unit 200 may be designed according to the specie or size of aquatic animal 10 in question. In one example, the rigid electric conducting members 310, 310a-b may be extending close to the transport unit 200 to ensure contact with the head of a small/thin animal, while it may be shorter, i.e. extend to a gap/spacing longer from the transport unit 200, for a larger/thick animals to ensure that the animal will fit below the rows 320a-n without the rigid electric conducting members 310, 310a-b of the respective rows 320a-n touching the rigid electric conducting members 310, 310a-b of the subsequent/following row 320a-n.

Reference is now made Fig. 7a-f showing a further embodiment of the electric stunner apparatus 100 according to the present invention. In Fig. 7a-c are shown further embodiments wherein the rigid electric conducting member 310, 310a-b is provided with a pivoting point 314 having an elongated shape/recess extending in horizontal direction, vertical direction, or a combination thereof, of the first axial distal end 312 of the rigid electric conducting member 310, 310a-b. In Fig. 7d-f are shown further embodiments wherein the rigid electric conducting member 310, 310a-b is arranged to the shaft 321 of the respective row 320a-n via a connection interface 350 having an elongated recess 351 extending in horizontal direction, vertical direction, or a combination thereof. In further embodiments a combination of the elongated shape/recess alternatives is used. By the mentioned elongated shape of the pivoting point 314 and/or elongated recess 351 of the connection interface 350, enabled is that the rigid electric conducting member 310, 310a-b may move a restricted distance in the horizontal plane, vertical plane, or a combination thereof, under affection of an aquatic animal 10. By this is achieved that the rigid electric conducting member 310, 310a-b can adapt to variations in the size of the aquatic animals 10.

By having a vertical extension this will allow the rigid electric conducting member 310, 310a-b to initially be positioned close to the transport unit 200, i.e. with an initial gap/spacing above the transport unit 200 adapted smaller aquatic animals 310, while at the same time be able to handle larger aquatic animals 10 by that rigid electric conducting member 310, 310a-b may be pushed upwards/vertically to allow larger aquatic animals 10 to pass, i.e. pushed upwards/vertically to a larger gap/spacing over the transport unit 200.

By having a horizonal extension, this will be suitable for allowing the rigid electric conducting members 310, 310a-b to yield some by allowing a restricted movement in the horizontal direction, i.e. axial direction of the electric stunner device 300, to prevent slowing/retaining an aquatic animal 10 too much.

By having oriented the rigid electric conducting members 310, 310a-b with the correct distance according to specie and specific requirements, one can achieve an initial on/off-pulse effect of the electric field strength, an initial strong and later lower field strength, an initial low field strength and later strong field strength, or any combination thereof.

In accordance with a further embodiment of the present invention, every other row 320a-n of the rigid electric conducting members 310, 310a-b has a long and short rigid electric conducting member 310a-b, where the long rigid conducting member is positively charged while the short rigid electric conducting member is negatively charged. Together with a negative electrode in the transport unit 200, this can shorten the length of the electric stunner apparatus 100. In such an embodiment, the short and long rigid electric conducting members are configured to not come into engagement with each other as the aquatic animal 10 pass through the electric stunner device 300. In this manner it is provided an embodiment that does not need an overlap between the rows 320a-n of rigid electric conducting members 310, 310a-b.

Technical features of the described embodiments may be combined to form modified embodiments within the scope of the attached claims.

## Claims

1. An electric stunning apparatus (100) for anesthetizing an aquatic animal (10), hereunder fish and crustaceans, wherein the electric stunning apparatus (100) comprises a transport unit (200) configured to transport aquatic animals (10) through an electric stunning phase wherein the aquatic animal (10) is exposed to an electric field provided by an electric stunning device (300) positioned in a parallel plane above the transport unit (200), the electric stunning device (300) comprising multiple rigid electric conducting members (310, 310a-b) arranged pivotable in at least one row (320a-n) by a first axial distal end (312) thereof and with a second free axial distal end (313) positioned in close vicinity of the transport unit (200) and configured for engagement with the aquatic animal (10), wherein the rigid electric conducting members (310, 310a-b) of each row (320an) are distributed in transversal direction of the electric stunning device (300) and transport unit (200), wherein
the electric stunning device (300) being configured to achieve controlled exposure time for electric field strength applied to the aquatic animal (10) in the electric stunning phase by that:
- the electric stunning device (300) comprises at least two rows (320a-n) of rigid electric conducting members (310, 310a-b) and wherein the rigid electric conducting members (310, 310a-b) of adjacent rows (320a-n) are configured to be overlapping in transversal direction of the electric stunning device (300) and transport unit (200), or
- the electric stunning device (300) comprises at least one row (320a-n) of rigid electric conducting members (310, 310a-b) and wherein the rigid electric conducting members (310, 310a-b) are configured with a balanced weight about a pivoting point (314) arranged in vicinity of the first axial distal end (312), the balanced weight being configured so that minimum moment is required for pivoting the rigid electric conducting member (310, 310a-b), or
- a combination thereof,
ensuring that it electric contact is achieved between the rigid electric conducting members (310, 310a-b) and the aquatic animal (10) through the entire electric stunning phase and that the aquatic animal (10) passes through the electric field strength of the electric stunning device (300) with a controlled exposure time.

2. The electric stunning apparatus (100) according to claim 1, wherein the rigid electric conducting members (310, 310a-b) are configured to continuously apply electric field strength to the aquatic animal (10), wherein the applied electric field strength might be the same or different on subsequent rows 320a-n, or configured to apply the electric field strength in a pulsed manner.

3. The electric stunning apparatus (100) according to claim 1, wherein the rigid electric conducting members (310, 310a-b) of adjacent rows (320a-n) are also overlapping in axial direction of the electric stunner device (300) and transport unit (200).

4. The electric stunning apparatus (100) according to any preceding claim, wherein the respective rigid electric conducting members (310, 310a-b) of adjacent rows (320) are positioned with an offset in transversal direction of the electric stunning device (300) and transport unit (200), the offset corresponding at least to the width of the rigid electric conducting members (310, 310a-b).

5. The electric stunning apparatus (100) according to any preceding claim, wherein the rigid electric conducting members (310, 310a-b) have a curved axial profile and the second free axial distal end (313) ending in a plane deviating from the vertical plane with an angle (α) towards a following row (320a-n) of rigid electric conducting members (310, 310a-b), seen in moving director of the transport unit (200).

6. The electric stunning apparatus (100) according to any preceding claim, wherein the rigid electric conducting members (310, 310a-b) are provided or manufactured with a weight (315, 316) or adjustable pivoting point (314, 317a-c) at a first body section (311a) forming the first axial distal end (312), enabling the balanced weight.

7. The electric stunning apparatus (100) according to claim 6, wherein the weight (315, 316) is integrated, exchangeable or adjustably arranged to the first body section (311a) forming the first axial distal end (312) of the rigid electric conducting member (310, 310a-b).

8. The electric stunning apparatus (100) according to claim 5, wherein the rigid electric conducting members (310, 310a-b) in addition has a curved profile in the axial direction enabling balanced weight about the pivoting point (314).

9. The electric stunning apparatus (100) according to claim 6 and 8, wherein the rigid electric conducting members (310, 310a-b) have both a curved profile in the axial direction and a weight (315, 316) or adjustable pivoting point (314), or a combination thereof, enabling balanced weight about the pivoting point (314) thereof.

10. The electric stunning apparatus (100) according claim 5, wherein the rigid electric conducting member (310, 310a-b) has a curved profile in the axial direction thereof extending on one or both sides of an axial center axis (A-A) through the pivoting point (314).

11. The electric stunning apparatus (100) according to claim 4 and 5, wherein comprising first (310a) and second (310b) rigid electric conducting members arranged in alternating rows (320a-n) and wherein the first (310a) and second (310b) rigid electric conducting members have different curvatures in the axial direction, wherein the rigid electric conducting members (310a) of a preceding row (320a, c, e, n), seen in moving direction of the transport unit (200), have a curvature and length positioning the second free distal end (313) thereof in close vicinity of the second free distal end (313) of the second rigid electric conducing members (310b) of a subsequent row (320b, d, f, n+1), in initial state.

12. The electric stunning apparatus (100) according to claim 1, wherein the rigid electric conducting members (310, 310a-b) of alternating rows (320a-n) are positively and negatively charged, or arranged positively or negatively charged in a desired pattern.

13. The electric stunning apparatus (100) according to claim 1, wherein the rigid electric conducting members (310, 310a-b) of alternating rows (320a-n) have the same, alternating or varying distance (L) between them.

14. The electric stunning apparatus (100) according to claim 4, wherein the rigid electric conducting members (310, 310a-b) are displaced in transversal direction by means of non-conductive spacers (322a-b).

15. The electric stunning apparatus (100) according to any preceding claim, wherein there is a distance (I) from a first axial distal end (201) of the transport unit (200) to the first row (320a) of electric conducting members (310, 310a-b), wherein the distance (I) is configured according to the specie to be anesthetized.

16. The electric stunning apparatus (100) according to any preceding claim, wherein:
- the pivoting point (314) of the rigid electric conducting member (310, 310a-b) has an elongated shape extending in horizontal direction, vertical direction, or a combination thereof, of the first axial distal end (312) of the rigid electric conducting member (310, 310a-b),
- the rigid electric conducting member (310, 310a-b) is arranged to a shaft (321) of the respective row (320a-n) via a connection interface (350) having an elongated recess (351) extending in horizontal direction, vertical direction, or a combination thereof, or
- a combination thereof,
enabling the rigid electric conducting member (310, 310a-b) to move a restricted distance in the horizontal plane, vertical plane, or a combination thereof, under affection of an aquatic animal (10).
